# EUROPEAN PATENT APPLICATION

(11) **EP 2 882 247 A1**
(43) Date of publication of application: **10.06.2015**
(21) Application number: 12883646.7
(22) Date of filing: 31.08.2012
(51) Int. Cl.: H04W 72/06

(54) **SCHEDULING METHOD, BASE STATION AND BASE STATION CONTROLLER**

(71) Applicant: Huawei Technologies Co., Ltd., Longgang District Shenzhen, Guangdong 518129 (CN)
(72) Inventor: CHEN, Dong, Shenzhen Guangdong 518129 (CN); LIN, Yuan, Shenzhen Guangdong 518129 (CN)
(74) Representative: Haley, Stephen
(86) International application number: PCT/CN2012/080849
(87) International publication number: WO 2014/032277

(57) **Abstract**

Embodiments of the present invention provide a scheduling method, a base station controller, and a base station. The method includes: determining to enable priority scheduling for a specific user equipment UE, where the specific UE is a UE with relatively low performance; and sending instruction information to a base station, where the instruction information is used to instruct the base station to execute the priority scheduling for the specific UE. In the embodiments of the present invention, in the case of determining to enable priority scheduling for a specific user equipment UE, a base station controller sends instruction information to a base station, and the base station executes the priority scheduling for the specific UE according to the instruction information, thereby improving performance of the specific UE.

## Description

### TECHNICAL FIELD

Embodiments of the present invention relate to the field of communications technologies, and in particular, to a scheduling method, a base station, and a base station controller.

### BACKGROUND

Various nodes, such as a high-power macro base station and various types of low-power nodes, are deployed on a heterogeneous network so as to meet users' requirements on various services. The low-power nodes include a micro base station, a pico base station, a femto base station, a relay station, and the like.

In an intra-frequency networking scenario of the heterogeneous network, for example, a macro base station and a micro base station use a same frequency, and in the case where no frequency resources are added, total throughput of a system and quality of a service of a user are improved through hot spot coverage of the micro base station or by filling coverage holes. However, a problem of co-channel interference may occur on an intra-frequency network, thereby causing great negative performance gains to a user at the coverage edge of a serving cell.

For example, in a soft handover area of the macro base station and the micro base station, a UE whose serving cell is the micro base station (also can be called a "micro network UE" in the following) transmits uplink data at full power so as to obtain relatively high throughput. However, for a UE whose serving cell is the macro base station (also can be called a "macro network UE" in the following), the uplink transmission signal is an interference signal. Therefore, performance of the macro network UE is reduced. For another example, the micro base station transmits downlink data to the micro network UE. Even power of the micro base station is lower than power of the macro base station, a macro network UE in an area near the coverage of the micro base station is still capable of receiving a downlink signal of the micro base station. Therefore, the downlink transmission signal is an interference signal that affects the performance of the macro network UE. For still another example, when the macro base station transmits downlink data to the macro network UE in the area near the coverage of the micro base station, interference also occurs upon the micro network UE. Therefore, performance of the micro network UE is affected.

### SUMMARY

Embodiments of the present invention provide a scheduling method, a base station, and a base station controller, which are capable of improving performance of a specific user equipment UE.

In a first aspect, a scheduling method is provided, where the method includes: determining to enable priority scheduling for a specific user equipment UE, where the specific UE is a UE with relatively low performance; and sending instruction information to a base station, where the instruction information is used to instruct the base station to execute the priority scheduling for the specific UE.

In combination with the first aspect, in a first possible implementation manner, specific implementation may be as follows: the relatively low performance includes at least one of the following conditions: throughput is less than or equal to a throughput threshold, signal strength is lower than or equal to a strength threshold, and signal quality is lower than or equal to a quality threshold.

In combination with the first aspect or the first possible implementation manner of the first aspect, in a second possible implementation manner, specific implementation for the determining to enable priority scheduling for a specific UE may be:
if the number of UEs in a soft handover area is greater than a threshold, determining to enable the priority scheduling for the specific UE; or, if a UE adopts a solution of extending cell coverage when selecting a serving cell, determining to enable the priority scheduling for the specific UE.

According to the second possible implementation manner of the first aspect, in a third possible implementation manner, specific implementation for the adopting, by a UE, a solution of extending cell coverage when selecting a serving cell may be:
adopting, by the UE, an offset value when selecting the serving cell.

In combination with the first aspect or the first possible implementation manner to the third possible implementation manner of the first aspect, in a fourth possible implementation manner, before the sending instruction information to a base station, specific implementation may be:
determining a target UE for priority scheduling, where the instruction information is further used to indicate an identifier of the target UE.

According to the fourth possible implementation manner of the first aspect, in a fifth possible implementation manner, specific implementation for the determining a target UE for priority scheduling may be:
determining the target UE for priority scheduling according to throughput of a UE, signal strength of the UE, and/or signal quality of the UE; or determining a UE in the soft handover area as the target UE for priority scheduling.

In combination with the first aspect or the first possible implementation manner to the fifth possible implementation manner of the first aspect, in a sixth possible implementation manner, specific implementation for the sending instruction information to a base station may be:
sending a signaling message to the base station, where the signaling message carries the instruction information; or sending a user plane data frame to the base station, where the user plane data frame carries the instruction information.

In combination with the first aspect or the first possible implementation manner to the fifth possible implementation manner of the first aspect, in a seventh possible implementation manner, specific implementation for the enabling priority scheduling for a specific UE may be:
increasing scheduling resources allocated for the specific UE and/or increasing scheduling frequency for the specific UE.

In a second aspect, a scheduling method is provided, where the method includes: receiving instruction information sent by a base station controller; and executing priority scheduling for a specific user equipment UE according to the instruction information, where the specific UE is a UE with relatively low performance.

In combination with the second aspect, in a first possible implementation manner, specific implementation may be as follows: the relatively low performance includes at least one of the following conditions: throughput is less than or equal to a throughput threshold, signal strength is lower than or equal to a strength threshold, and signal quality is lower than or equal to a quality threshold.

In combination with the second aspect or the first possible implementation manner, in a second possible implementation manner, before the executing priority scheduling for a specific user equipment UE according to the instruction information, specific implementation may be:
determining a target UE according to the instruction information and determining the target UE as the specific UE; or determining a target UE according to the instruction information and determining the specific UE according to a parameter value of the target UE; or determining the specific UE according to a parameter value of a UE.

According to the second possible implementation manner of the second aspect, in a third possible implementation manner, specific implementation may be as follows: the parameter value includes at least one of the following: a channel quality indicator CQI value, a signal-to-interference ratio SIR, and scheduling information SI.

In combination with the second aspect or the first possible implementation manner to the third possible implementation manner of the second aspect, in a fourth possible implementation manner, specific implementation for the receiving instruction information sent by a base station controller may be:
receiving a signaling message sent by the base station controller, where the signaling message carries the instruction information; or receiving a user plane data frame sent by the base station controller, where the user plane data frame carries the instruction information.

In combination with the second aspect or the first possible implementation manner to the fourth possible implementation manner of the second aspect, in a fifth possible implementation manner, specific implementation for the executing priority scheduling for a specific UE according to the instruction information may be:
increasing scheduling resources allocated for the specific UE according to the instruction information; and/or increasing scheduling frequency for the specific UE according to the instruction information.

In a third aspect, a base station controller is provided, where the base station controller includes: a determining unit, configured to determine to enable priority scheduling for a specific user equipment UE, where the specific UE is a UE with relatively low performance; and a sending unit, configured to send instruction information to a base station, where the instruction information is used to instruct the base station to execute the priority scheduling for the specific UE.

In combination with the third aspect, in a first possible implementation manner, the determining unit is specifically configured to: if the number of UEs in a soft handover area is greater than a threshold, determine to enable the priority scheduling for the specific UE; or specifically configured to: if a UE adopts a solution of extending cell coverage when selecting a serving cell, determine to enable the priority scheduling for the specific UE.

In combination with the third aspect or the first possible implementation manner of the third aspect, in a second possible implementation manner, specific implementation for the adopting, by a UE, a solution of extending cell coverage when selecting a serving cell may be: adopting, by the UE, an offset value when selecting the serving cell.

In combination with the third aspect or the first possible implementation manner to the second possible implementation manner of the third aspect, in a third possible implementation manner, the determining unit is further configured to: determine a target UE for priority scheduling, where the instruction information is further used to indicate an identifier of the target UE.

In combination with the third possible implementation manner of the third aspect, in a fourth possible implementation manner, the determining unit is specifically configured to: determine the target UE for priority scheduling according to throughput of a UE, signal strength of the UE, and/or signal quality of the UE; or determine a UE in the soft handover area as the target UE for priority scheduling.

In combination with the third aspect or the first possible implementation manner to the fourth possible implementation manner of the third aspect, in a fifth possible implementation manner, the sending unit is specifically configured to: send a signaling message to the base station, where the signaling message carries the instruction information; or specifically configured to: send a user plane data frame to the base station, where the user plane data frame carries the instruction information.

In combination with the third aspect or the first possible implementation manner to the fifth possible implementation manner of the third aspect, in a sixth possible implementation manner, the enabling priority scheduling for a specific UE includes: increasing scheduling resources allocated for the specific UE and/or increasing scheduling frequency for the specific UE.

In a fourth aspect, a base station is provided, where the base station includes: a receiving unit, configured to receive instruction information sent by a base station controller; and a scheduling unit, configured to execute priority scheduling for a specific user equipment UE according to the instruction information received by the receiving unit, where the specific UE is a UE with relatively low performance.

In combination with the fourth aspect, in a first possible implementation manner, the base station further includes a determining unit, where the determining unit is configured to: determine a target UE according to the instruction information and determine the target UE as the specific UE; or configured to: determine a target UE according to the instruction information and determine the specific UE according to a parameter value of the target UE; or configured to: determine the specific UE according to a parameter value of a UE.

According to the fourth aspect or the first possible implementation manner of the fourth aspect, in a second possible implementation manner, the parameter value includes at least one of the following: a channel quality indicator CQI value, a signal-to-interference ratio SIR, and scheduling information SI.

In combination with the fourth aspect or the first possible implementation manner to the second possible implementation manner of the fourth aspect, in a third possible implementation manner, the receiving unit is specifically configured to: receive a signaling message sent by the base station controller, where the signaling message carries the instruction information; or specifically configured to: receive a user plane data frame sent by the base station controller, where the user plane data frame carries the instruction information.

In combination with the fourth aspect or the first possible implementation manner to the third possible implementation manner of the fourth aspect, in a fourth possible implementation manner, the scheduling unit is specifically configured to: increase scheduling resources allocated for the specific UE according to the instruction information; and/or specifically configured to: increase scheduling frequency for the specific UE according to the instruction information.

In the embodiments of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic scenario diagram of a network system that is capable of implementing embodiments of the present invention;
FIG. 2 is a flowchart of a scheduling method according to an embodiment of the present invention;
FIG. 3 is a flowchart of a scheduling method according to another embodiment of the present invention;
FIG. 4 is a schematic flowchart of a process of a scheduling method according to an embodiment of the present invention;
FIG. 5 is a schematic flowchart of a process of a scheduling method according to another embodiment of the present invention;
FIG. 6 is a schematic flowchart of a process of a scheduling method according to another embodiment of the present invention;
FIG. 7 is a schematic flowchart of a process of a scheduling method according to another embodiment of the present invention;
FIG. 8 is a structural block diagram of a base station controller according to an embodiment of the present invention;
FIG. 9 is a structural block diagram of a base station according to another embodiment of the present invention;
FIG. 10 is a block diagram of a device according to an embodiment of the present invention;
FIG. 11 is a structural block diagram of a base station controller according to an embodiment of the present invention; and
FIG. 12 is a structural block diagram of a base station according to another embodiment of the present invention.

### DESCRIPTION OF EMBODIMENTS

The technical solutions in the present invention may apply to various communications systems, for example, a Worldwide Interoperability for Microwave Access (WiMAX, Worldwide Interoperability for Microwave Access) system, a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless) system, a UMTS (Universal Mobile Telecommunications System, Universal Mobile Telecommunications System), a general packet radio service (GPRS, General Packet Radio Service) system, and a Long Term Evolution (LTE, Long Term Evolution) system.

A user equipment (UE, User Equipment) may also be called a mobile terminal (Mobile Terminal), a mobile user equipment, or the like. It may communicate with one or more core networks through a radio access network (for example, RAN, Radio Access Network). The user equipment may be a mobile terminal, for example, a mobile phone (or called a "cellular" phone) or a computer equipped with a mobile terminal. For example, the user equipment may be a portable, pocket, handheld, computer-embedded, or vehicle-mounted mobile apparatus, which exchanges languages and/or data with the radio access network.

A base station may be a base transceiver station (BTS, Base Transceiver Station) in the GSM or CDMA, a NodeB (NodeB) in the WCDMA, or an evolved NodeB (eNB or e-NodeB, evolutional Node B) in the LTE. This is not limited in the present invention. For ease of description, however, a NodeB is taken as an example for description in the following embodiments.

A base station controller may be a base station controller (BSC, Base Station Controller) in the GSM or CDMA or a radio network controller (RNC, Radio Network Controller) in the WCDMA, or may be combined in an evolved NodeB (eNB or e-NodeB, evolutional Node B) in the LTE. This is not limited in the present invention. For ease of description, however, an RNC is taken as an example for description in the following embodiments.

For ease of description, the following embodiments take a WCDMA system as an example. It should be understood that the embodiments of the present invention are not limited to the WCDMA system and another mobile communications system except the WCDMA system may also be taken as an example.

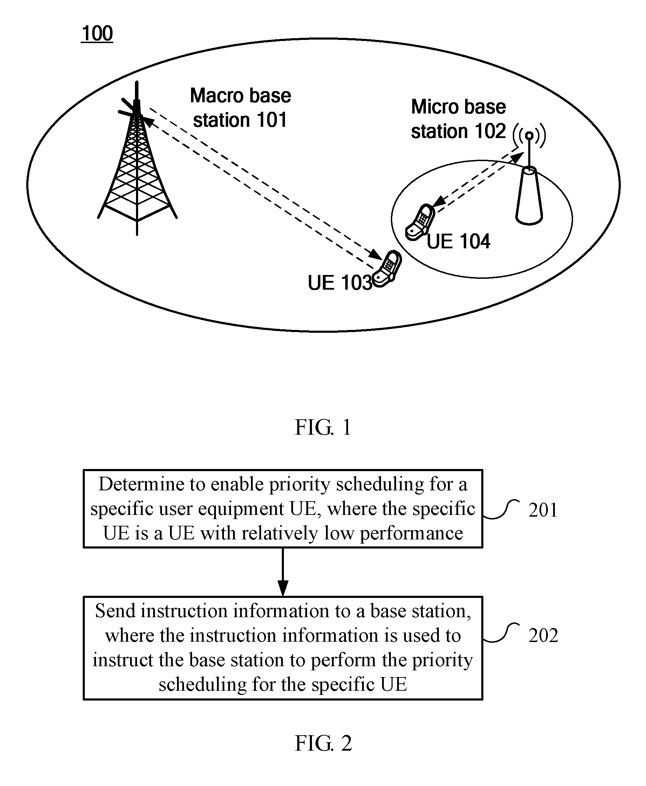

FIG. 1 is a schematic scenario diagram of a network system that is capable of implementing embodiments of the present invention. In FIG. 1, a macro base station 101 and a micro base station 102 have a same frequency; that is, they operate at a same center frequency. A serving cell of a UE 103 is the macro base station, and a serving cell of a UE 104 is the micro base station. The UE 103 and the UE 104 are specific UEs in a soft handover area. The specific UEs refer to UEs with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like. It should be understood that this is not limited in the embodiments of the present invention.

It should be noted that the network system in FIG. 1 is merely a scenario provided to implement the present invention so as to describe the embodiments of the present invention more clearly, but is not intended to limit application scopes of the embodiments of the present invention. For example, FIG. 1 describes one macro base station 101, one micro base station 102, and two UEs 103 and 104. However, the embodiments of the present invention may further include more base stations or may further include more UEs. In addition to the preceding macro base station and micro base station, a base station may further be a base station of another type, for example, a pico base station, a femto base station, or a relay station. This is not limited in the embodiments of the present invention. In addition, in the network system in FIG. 1, a geographical location of a UE is not limited in the embodiments of the present invention.

FIG. 2 is a flowchart of a scheduling method according to an embodiment of the present invention. The method in FIG. 2 is executed by a base station controller.
201. Determine to enable priority scheduling for a specific user equipment UE.
202. Send instruction information to a base station, where the instruction information is used to instruct the base station to execute the priority scheduling for the specific UE.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, and the base station executes the priority scheduling for the specific UE according to the instruction information, thereby improving the performance of the specific UE.

Alternatively, as an embodiment, in step 201, the base station controller may determine to enable or not to enable the priority scheduling for the specific UE according to the number of UEs in a soft handover area. For example, if the number of UEs that are in a soft handover area of a macro cell and a micro cell and whose serving cell is the macro cell is greater than a certain threshold, the base station controller may determine to enable priority scheduling based on HSUPA (High Speed Uplink Packet Access, High Speed Uplink Packet Access) for the specific UE. It should be understood that whether a serving cell of a UE is a micro cell or a macro cell is not limited in this embodiment of the present invention. For example, the base station controller may further determine to enable priority scheduling based on HSDPA (High Speed Downlink Packet Access, High Speed Downlink Packet Access) for the specific UE. This is not limited in this embodiment of the present invention.

Alternatively, as another embodiment, in step 201, if a UE adopts a solution of extending cell coverage when selecting a serving cell, the priority scheduling for the specific UE is determined to be enabled. For example, if the UE adopts an offset value when selecting the serving cell, the base station controller may determine to enable the priority scheduling for the specific UE. Specifically, if a certain UE learns through measurement that signals of the macro cell are stronger than signals of the micro cell and a positive offset value is not set, the serving cell of the UE should be the macro cell. However, in a process of selecting the serving cell by the UE, a positive signal offset value is further added to a measured value of the signals of the micro cell so as to extend the coverage of the micro cell on the premise that transmit power of the micro cell is not increased. In this case, the UE learns through calculation that the signals of the micro cell are stronger than the signals of the macro cell. Therefore, the UE selects the micro cell as the serving cell. Therefore, if the UE detects, when selecting the serving cell, that a signal offset value is adopted for the signals of the micro cell, the base station controller may determine to enable the priority scheduling for the specific UE in the micro cell. It should be understood that this is not limited in the present invention; that is, whether an offset value is adopted in the micro cell or in the macro cell and why the offset value is introduced both fall within the scope of the present invention. It should further be understood that another solution of extending cell coverage adopted by the UE when it selects the serving cell may also serve as a basis for enabling the priority scheduling.

Alternatively, as another embodiment, before step 202, the base station controller may determine a target UE for priority scheduling, and the instruction information sent to the base station in step 202 is further used to indicate an identifier of the target UE. Further, the base station may take the target UE as the specific UE for which the priority scheduling is required to be executed, or the base station may select a part of target UEs from target UEs as specific UEs for which the priority scheduling is required to be executed. In an implementation manner, the base station controller may determine a target UE for priority scheduling according to throughput of a UE, signal strength of the UE, and/or signal quality of the UE. In another implementation manner, the base station controller may determine a UE in the soft handover area of the macro cell and the micro cell as the target UE for priority scheduling. In this way, flexibility of network scheduling can be effectively improved.

For example, if a serving cell of a UE is the macro cell and throughput of the UE is less than a certain threshold, the base station controller may determine the UE as the target UE. For another example, a UE in the soft handover area of the macro cell and the micro cell is used as the target UE; further, a UE that is in the soft handover area of the macro cell and the micro cell and whose serving cell is the macro cell or the micro cell may be used as the target UE; or, when signal quality of a UE is lower than a certain threshold, the base station controller determines the UE as the target UE. The signal quality may be CPICH (Common Pilot Channel, Common Pilot Channel) signal-to-noise ratio, Ec/No, CPICH RSCP (Received Signal Code Power, received signal code power), a path loss (Pathloss) value, or the like. It should be understood that this is not limited in this embodiment of the present invention.

It should be understood that a manner of determining the target UE for priority scheduling by the base station controller is not limited in this embodiment of the present invention; that is, any form in which the base station controller determines the target UE for priority scheduling falls within the scope of the present invention.

Alternatively, as another embodiment, in step 202, in an implementation manner, the base station controller may send a signaling message to the base station, where the signaling message carries the instruction information. The WCDMA is taken as an example. The base station controller may add an IE (Information Element, information element) to an existing NBAP (NodeB Applicant Part, NodeB applicant part) message through a lub interface (a logical interface between a radio network controller RNC and a NodeB) so as to instruct the base station to enable the priority scheduling for the specific UE. For example, an IE may be added to a system information update request (System Information Update Request) message so as to instruct the NodeB to adopt or not to adopt the priority scheduling for the specific UE. Further, the instruction information may further be used to indicate the identifier of the target UE. For example, the base station controller may indicate, by using an existing NBAP message, such as a radio link setup request (Radio Link Setup Request), through the lub interface, the target UE for which the base station controller determines that the priority scheduling is required to be performed. The radio link setup request (Radio Link Setup Request) itself carries an identifier of a related UE, and an IE is added to the request to instruct the NodeB to adopt or not to adopt the priority scheduling for the specific UE. It should be understood that this embodiment of the present invention is not limited to the foregoing. The base station controller may further add a new NBAP message as an instruction message so as to complete instructing the base station to adopt or not to adopt the priority scheduling for the specific UE or add a new NBAP message as instruction information to indicate the identifier of the target UE.

In another implementation manner, the base station controller may send the instruction information to the base station by a user plane FP (frame protocol) frame. The WCDMA is taken as an example. The base station controller may add a flag (flag) to a downlink data frame on the lub interface to instruct the base station to enable or not to enable the priority scheduling for the specific UE. For example, a flag is added to HS-DSCH data frame type 1 in an HS-DSCH (High Speed Downlink Shared Channel, High Speed Downlink Shared Channel). Further, the instruction information may also be used to indicate the identifier of the target UE. For example, the base station controller may indicate, by using the downlink data frame (for example, HS-DSCH data frame type 3) on the lub interface, the target UE for which the base station controller determines that the priority scheduling is required to be performed. If the data frame includes an identifier of a certain UE, the identifier of the UE may be used as the identifier of the target UE. It should be understood that a type of a specifically used user plane data frame is not limited in this embodiment of the present invention.

It should be noted that a form of sending the instruction information by the base station controller is not limited in this embodiment of present invention. In this embodiment of the present invention, not only the foregoing explicit manner may be adopted to send the instruction information, but also an implicit manner may be adopted to send the instruction information. For example, the base station controller may send the identifier of the target UE to the base station by using a dedicated message or a dedicated frame. In this case, the base station understands that it should execute the priority scheduling for the target UE, without the need of sending separate instruction information. For example, the base station controller sends a priority scheduling message to the base station, and the base station adopts or does not adopt the priority scheduling for the specific UE as long as receiving the message. If the message carries the identifier of the target UE, the base station may determine the target UEs as the specific UEs or determine the specific UE according to a parameter value of the target UE.

Alternatively, as another embodiment, the enabling priority scheduling for the specific UE may be increasing scheduling resources allocated for the specific UE and/or increasing scheduling frequency for the specific UE. For example, according to an original scheduling algorithm, the base station averagely schedules the specific UE n times per second. After a priority scheduling algorithm is adopted, the base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

In combination with a specific embodiment, the following describes in more detail a nonrestrictive example of the scheduling method according to this embodiment of the present invention.

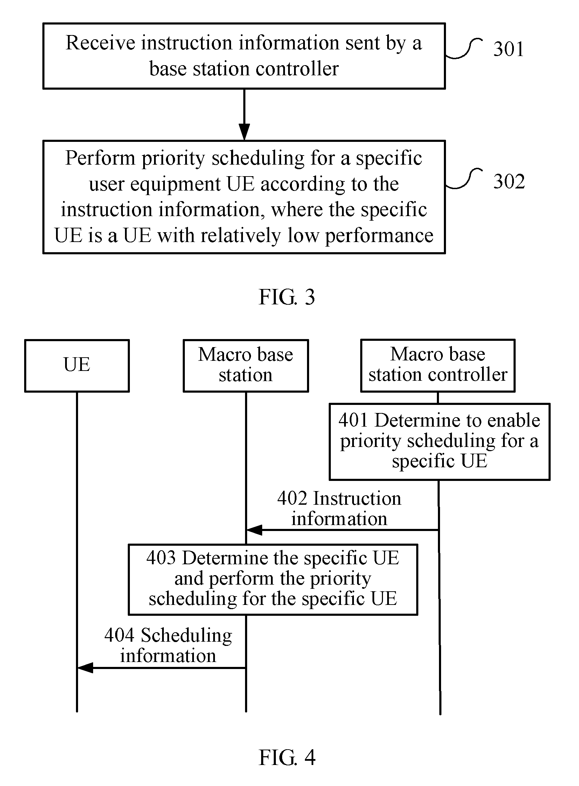

FIG. 3 is a flowchart of a scheduling method according to another embodiment of the present invention. The method in FIG. 3 is executed by a base station (the macro base station 101 or the micro base station 102 shown in FIG. 1) and corresponds to the method in FIG. 1. Therefore, descriptions that are the same as those in the embodiment in FIG. 1 are properly omitted.

301. Receive instruction information sent by a base station controller.

302. Execute priority scheduling for a specific user equipment UE according to the instruction information.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

Alternatively, as an embodiment, in step 301, the base station may receive a signaling message sent by the base station controller, where the signaling message carries the instruction information. The instruction information includes but is not limited to an NBAP message. The base station may further receive a user plane data frame sent by the base station controller, where the user plane data frame carries the instruction information. The instruction information includes but is not limited to a downlink data frame. Further, the instruction information may also be used to indicate an identifier of a target UE. It should be understood that this is not limited in this embodiment of the present invention. A manner of sending the instruction information is described as above, and therefore no further details are provided herein. It should be noted that a form of sending the instruction information by the base station controller is not limited in this embodiment of present invention.

Alternatively, as another embodiment, in step 302, in an implementation manner, the base station controller may determine the target UE, carry the identifier of the target UE in the instruction information, and send the instruction information to the base station, and the base station may determine the target UE according to the instruction information and determine the target UE as the specific UE or not. A manner of determining the target UE by the base station controller is described as above, and therefore no further details are provided herein. Further, the base station may determine the specific UE according to a parameter value of the target UE. In another implementation manner, the base station may determine the specific UE according to a parameter value of a UE. The parameter value include but is not limited to: a CQI (Channel Quality Indicator, channel quality indicator) value, an SIR (Signal to Interference Ratio, signal-to-interference ratio), and SI (Scheduling Information, scheduling information). It should be understood that this is not limited in this embodiment of the present invention. In this way, flexibility of network scheduling can be effectively improved.

For example, if a CQI value reported by a UE at a physical layer and/or SI reported by the UE at an MAC (Media Access Control, media access control) layer is smaller than a corresponding threshold, the base station may determine that the UE is the specific UE for which the priority scheduling is required to be performed. Alternatively, if a CQI value of the target UE is smaller than a certain threshold, the base station may determine that the target UE is the specific UE for which the priority scheduling is required to be performed. It should be understood that this is not limited in this embodiment of the present invention.

Alternatively, as another embodiment, executing, by the base station, the priority scheduling for the specific UE may be increasing scheduling resources allocated for the specific UE and/or increasing scheduling frequency for the specific UE. For example, according to an original scheduling algorithm, the base station averagely schedules the specific UE n times per second. After a priority scheduling algorithm is adopted, the base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

In addition, the base station may send scheduling information to a corresponding UE. For example, the base station may send information about scheduling resources to the specific UE through an E-AGCH (E-DCH Absolute Grant Channel, E-DCH Absolute Grant Channel) or an E-RGCH (E-DCH Relative Grant Channel, E-DCH Relative Grant Channel).

In combination with specific embodiments, the following describes in more detail nonrestrictive examples of the scheduling method according to the embodiments of the present invention. It should be noted that these examples are only used to help a person skilled in the art better understand the embodiments of the present invention, but are not intended to limit the scope of the present invention. FIG. 4 to FIG. 7 are schematic flowcharts of processes of scheduling methods applying to the network system in FIG. 1 according to the embodiments of the present invention. In FIG. 4 to FIG. 7, a WCDMA system is taken as an example for description. It should be understood that the embodiments of the present invention are not limited to the WCDMA system and another mobile communications system except the WCDMA system may also be taken as an example. It should further be noted that whether the priority scheduling is uplink scheduling or downlink scheduling and whether a serving cell of the specific UE is a macro base station or a micro base station are not limited in the embodiments of the present invention. In addition to the preceding macro base station and micro base station, a base station may further be a base station of another type, for example, a pico base station, a femto base station, or a relay station.

FIG. 4 is a schematic flowchart of a process of a scheduling method according to an embodiment of the present invention. The method in FIG. 4 applies to uplink priority scheduling for a specific UE whose serving cell is a macro base station.

401. A macro base station controller determines to enable priority scheduling for the specific UE.

For example, if the number of UEs that are in a soft handover area of a macro cell and a micro cell and whose serving cell is a micro base station is greater than a certain threshold, the macro base station controller may determine to enable priority scheduling based on HSUPA or E-HSUPA for the specific UE. For another example, if there is a UE that is in the soft handover area of the macro cell and the micro cell and whose serving cell is the macro base station, the macro base station controller may determine to enable the priority scheduling based on HSUPA for the specific UE. It should be understood that this is not limited in this embodiment of the present invention.

402. The macro base station controller sends instruction information to the macro base station.

For example, the macro base station controller may send a signaling message to the macro base station, where the signaling message carries the instruction information. Specifically, the macro base station controller may add an IE to an existing NBAP message (for example, a system information update request message) through a lub interface so as to instruct the macro base station to enable the priority scheduling based on HSUPA or E-HSUPA for the specific UE. It should be understood that this is not limited in this embodiment of the present invention and the macro base station controller may further add a new NBAP message as an instruction message or send the instruction information in an implicit manner.

For another example, the macro base station controller may send a user plane data frame to the macro base station, where the user plane data frame carries the instruction information. Specifically, the macro base station controller may add a flag to a downlink data frame (for example, HS-DSCH data frame type 1) on the lub interface to instruct the macro base station to enable priority scheduling based on HSUPA or E-HSUPA for the specific UE.

It should be noted that a form of sending the instruction information by the macro base station controller is not limited in this embodiment of present invention.

403. The macro base station determines the specific UE and executes priority scheduling for the specific UE.

For example, the macro base station receives the instruction information in step 402, and the macro base station may determine the specific UE according to a parameter value of a UE. The parameter value may include but is not limited to: a CQI value, an SIR, and SI. It should be understood that this is not limited in this embodiment of the present invention. Specifically, if a CQI value reported by a UE at the physical layer and/or SI reported by the UE at the MAC layer is smaller than a corresponding threshold, the macro base station may determine that the UE is the specific UE for which the priority scheduling is required to be performed. In this way, flexibility of network scheduling can be effectively improved.

Alternatively, the executing, by the macro base station, the priority scheduling for the specific UE may be increasing scheduling resources allocated for the specific UE and/or increasing scheduling frequency for the specific UE. For example, according to an original scheduling algorithm, the macro base station averagely schedules the specific UE n times per second. After a priority scheduling algorithm is adopted, the macro base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

404. The macro base station sends scheduling information to a UE.

For example, the macro base station may send information about scheduling resources to the UE through an E-AGCH or an E-RGCH, so that the UE sends uplink data on corresponding resources.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

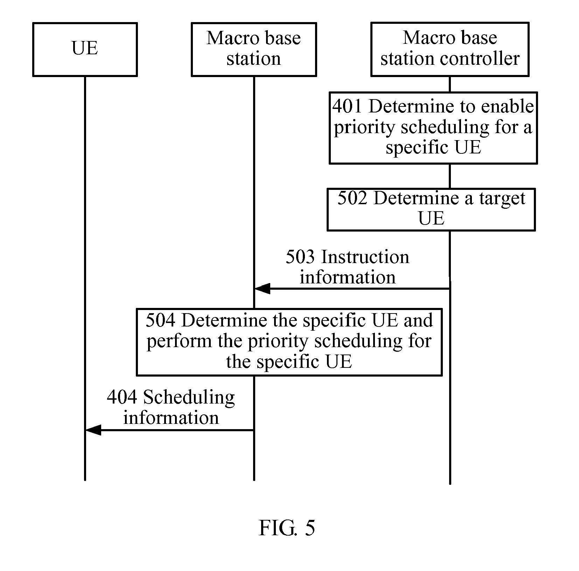

FIG. 5 is a schematic flowchart of a process of a scheduling method according to another embodiment of the present invention. A step the same as or similar to the step in FIG. 5 uses the same accompanying drawing sign. Therefore, no further details are provided herein so as to avoid repetition. The method in FIG. 5 applies to uplink priority scheduling for a specific UE whose serving cell is a macro base station.

502. A macro base station controller determines a target UE.

For example, the macro base station controller may determine the target UE for priority scheduling according to throughput of a UE, signal strength of the UE, and/or signal quality of the UE. Specifically, if a serving cell of a UE is a macro cell and throughput of the UE is less than a certain threshold, the macro base station controller may determine the UE as the target UE. It should be understood that this is not limited in this embodiment of the present invention.

In this way, flexibility of network scheduling can be effectively improved.

503. The macro base station controller sends instruction information to the macro base station.

The instruction information may be used to instruct a base station to enable priority scheduling based on HSUPA or E-HSUPA for the specific UE and may further be used to indicate an identifier of the target UE determined in step 502. For example, the macro base station controller may send a signaling message to the macro base station and carry the instruction information by using the signaling message. Specifically, the macro base station controller may use an existing NBAP message (for example, a radio link setup request message) through a lub interface to indicate the target UE for which the macro base station controller determines that the priority scheduling is required to be performed. For another example, the macro base station controller may send a user plane data frame to the macro base station, where the user plane data frame carries the instruction information. Specifically, the macro base station controller may indicate, by using a downlink data frame (for example, HS-DSCH data frame type 3) on the lub interface, the target UE for which the macro base station controller determines that the priority scheduling is required to be performed. If the data frame includes an identifier of a certain UE, the UE may be used as the target UE for priority scheduling. It should be understood that this is not limited in this embodiment of the present invention.

It should be noted that a form of sending the instruction information by the macro base station controller is not limited in this embodiment of present invention.

504. The macro base station determines the specific UE and executes priority scheduling for the specific UE.

For example, the macro base station may determine the target UE according to the instruction information received in step 503 and determine the specific UE from the target UE. Further, the macro base station may determine the specific UE according to a parameter value of the target UE. The parameter value may include but is not limited to: a CQI value, an SIR, and SI. It should be understood that this is not limited in this embodiment of the present invention. Specifically, if a CQI value of the target UE is smaller than a certain threshold, the base station may determine that the target UE is the specific UE for which the priority scheduling is required to be performed. It should be understood that this is not limited in this embodiment of the present invention.

In this way, flexibility of network scheduling can be effectively improved.

Alternatively, the executing, by the base station, the priority scheduling for the specific UE may be increasing scheduling resources allocated for the specific UE and/or increasing scheduling frequency for the specific UE. For example, according to an original scheduling algorithm, the macro base station averagely schedules the specific UE n times per second. After a priority scheduling algorithm is adopted, the macro base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

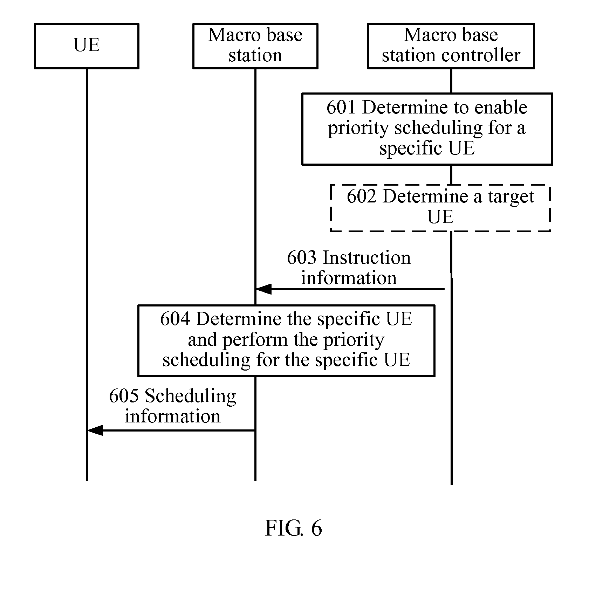

FIG. 6 is a schematic flowchart of a process of a scheduling method according to another embodiment of the present invention. The method in FIG. 6 applies to downlink priority scheduling for a specific UE whose serving cell is a macro base station.

601. A macro base station controller determines to enable priority scheduling for the specific UE.

For example, if the number of UEs that are in a soft handover area of a macro cell and a micro cell and whose serving cell is a macro base station is greater than a certain threshold, the macro base station controller may determine to enable priority scheduling based on HSDPA or E-HSDPA for the specific UE. For another example, if there is a UE that is in the soft handover area of the macro cell and the micro cell and whose serving cell is the macro base station, the macro base station controller may determine to enable the priority scheduling based on HSDPA for the specific UE. It should be understood that this is not limited in this embodiment of the present invention.

Alternatively, step 602 is executed.

602. The macro base station controller determines a target UE.

For example, the macro base station controller may determine the target UE for priority scheduling according to throughput of a UE, signal strength of the UE, and/or signal quality of the UE. Specifically, if a serving cell of a UE is a macro cell and throughput of the UE is less than a certain threshold, the macro base station controller may determine the UE as the target UE. It should be understood that this is not limited in this embodiment of the present invention.

In this way, flexibility of network scheduling can be effectively improved.

603. The macro base station controller sends instruction information to the macro base station.

The instruction information may be used to instruct the macro base station to enable the priority scheduling based on HSDPA or E-HSDPA for the specific UE. Alternatively, the instruction information may further be used to indicate an identifier of the target UE determined in step 602. For example, the macro base station controller may send a signaling message to the macro base station, where the signaling message carries the instruction information. Specifically, the macro base station controller may add an IE to an existing NBAP message (for example, a system information update request message) through a lub interface so as to instruct the macro base station to enable the priority scheduling based on HSDPA or E-HSDPA for the specific UE. Further, the macro base station controller may indicate, by using the existing NBAP message (for example, a radio link setup request message) through the lub interface, the target UE for which the macro base station controller determines that the priority scheduling is required to be performed. The radio link setup request message itself carries an identifier of a related UE. It should be understood that this is not limited in this embodiment of the present invention and the macro base station controller may further add a new NBAP message as an instruction message. Alternatively, the macro base station controller may indicate, by using the existing NBAP message (for example, a radio link setup request message) through the lub interface, the target UE for which the macro base station controller determines that the priority scheduling is required to be performed.

For another example, the macro base station controller may send a user plane data frame to the macro base station, where the user plane data frame carries the instruction information. Specifically, the macro base station controller may add a flag to a downlink data frame (for example, HS-DSCH data frame type 1) on the lub interface to instruct the macro base station to enable the priority scheduling based on HSDPA or E-HSDPA for the specific UE. Alternatively, the macro base station controller may indicate, by using the downlink data frame (for example, HS-DSCH data frame type 3) on the lub interface, the target UE for which the macro base station controller determines that the priority scheduling is required to be performed. If the data frame includes an identifier of a certain UE, the identifier of the UE may be used as the identifier of the target UE. It should be understood that this is not limited in this embodiment of the present invention.

It should be noted that a form of sending the instruction information by the macro base station controller is not limited in this embodiment of present invention.

604. The macro base station determines the specific UE and executes priority scheduling for the specific UE.

For example, the macro base station receives the instruction information in step 602 and the macro base station may determine the specific UE according to a parameter value of a UE. The parameter value may include but is not limited to: a CQI value, an SIR, and SI. It should be understood that this is not limited in this embodiment of the present invention. Specifically, if a CQI value reported by a UE at the physical layer and/or SI reported by the UE at the MAC layer is smaller than a corresponding threshold, the macro base station may determine that the UE is the specific UE for which the priority scheduling is required to be performed.

Alternatively, the macro base station may determine the target UE according to the instruction information received in step 603 and determine the specific UE from the target UE. Further, the macro base station may determine the specific UE according to a parameter value of the target UE. The parameter value may include but is not limited to: a CQI value, an SIR, and SI. It should be understood that this is not limited in this embodiment of the present invention. Specifically, if a CQI value of the target UE is smaller than a certain threshold, the macro base station may determine that the target UE is the specific UE for which the priority scheduling is required to be performed. It should be understood that this is not limited in this embodiment of the present invention.

In this way, flexibility of network scheduling can be effectively improved.

Alternatively, the executing, by the macro base station, the priority scheduling for the specific UE may be increasing scheduling resources allocated for the specific UE and/or increasing scheduling frequency for the specific UE. For example, according to an original scheduling algorithm, the macro base station averagely schedules the specific UE n times per second. After a priority scheduling algorithm is adopted, the macro base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

605. The macro base station sends scheduling information to a UE.

For example, the macro base station may send information about scheduling resources to the UE through an E-AGCH or an E-RGCH, so that the UE sends downlink data on corresponding resources.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

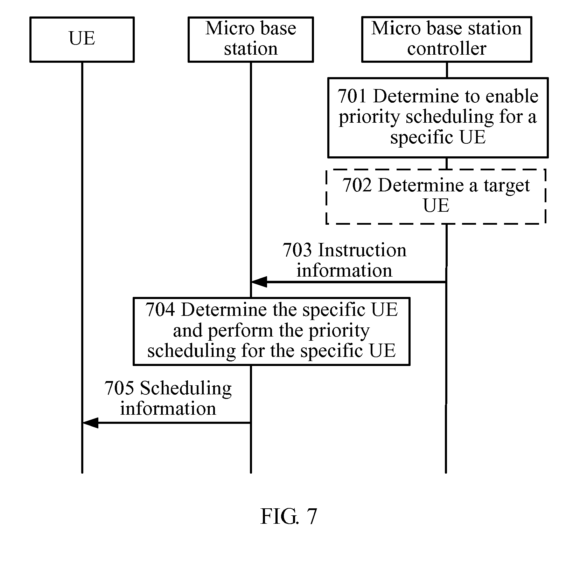

FIG. 7 is a schematic flowchart of a process of a scheduling method according to another embodiment of the present invention. The method in FIG. 7 applies to downlink priority scheduling for a specific UE whose serving cell is a micro base station.

701. A micro base station controller determines to enable priority scheduling for the specific UE.

If a UE adopts a solution of extending cell coverage when selecting a serving cell, the micro base station controller may determine to enable priority scheduling based on HSDPA or E-HSDPA for the specific UE. For example, if the UE adopts an offset value when selecting the serving cell, a base station controller may determine to enable the priority scheduling for the specific UE. Specifically, if a certain UE learns through measurement that signals of a macro cell are stronger than signals of a micro cell and a positive offset value is not set, a serving cell of the UE should be the macro cell. However, in a process of selecting the serving cell by the UE, a positive signal offset value is further added to a measured value of the signals of the micro cell so as to extend the coverage of the micro cell on the premise that transmit power of the micro cell is not increased. In this way, the UE learns through detection that the signals of the micro cell are stronger than the signals of the macro cell. Therefore, the UE selects the micro cell as the serving cell. When the UE selects the serving cell and if the positive signal offset value is adopted for the signals of the micro cell and the coverage of the micro cell is extended, the micro base station controller may determine to enable the priority scheduling based on HSDPA or E-HSDPA for the specific UE. It should be understood that this is not limited in the present invention; that is, whether an offset value is adopted in the micro cell or in the macro cell and why the offset value is introduced both fall within the scope of the present invention. It should further be understood that another solution of extending cell coverage adopted by the UE when it selects the serving cell may also serve as a basis for enabling the priority scheduling. It should further be understood that another solution of extending cell coverage adopted by the UE when it selects the serving cell may also serve as a basis for enabling the priority scheduling.

Alternatively, step 702 is executed.

702. The micro base station controller determines a target UE.

For another example, the micro base station controller may use a UE in a soft handover area of the macro cell and the micro cell as the target UE; further, a UE that is in the soft handover area of the macro cell and the micro cell and whose serving cell is the micro base station may be used as the target UE; and/or, when signal quality of a UE is lower than a certain threshold, the micro base station controller determines the UE as the target UE. The signal quality may be CPICH Ec/No, CPICH RSCP, a Pathloss value, or the like. It should be understood that this is not limited in this embodiment of the present invention.

703. The micro base station controller sends instruction information to the micro base station.

The instruction information may be used to instruct the micro base station to enable the priority scheduling based on HSDPA or E-HSDPA for the specific UE. Alternatively, the instruction information may further be used to indicate an identifier of the target UE determined in step 702. For example, the micro base station controller may send a signaling message to the micro base station, where the signaling message carries the instruction information. Specifically, the micro base station controller may add an IE to an existing NBAP message (for example, a system information update request message) through a lub interface so as to instruct the micro base station to enable the priority scheduling based on HSDPA or E-HSDPA for the specific UE. It should be understood that this is not limited in this embodiment of the present invention and the micro base station controller may further add a new NBAP message as an instruction message. Alternatively, the micro base station controller may indicate, by using the existing NBAP message (for example, a radio link setup request message) through the lub interface, the target UE for which the micro base station controller determines that the priority scheduling is required to be performed.

For another example, the micro base station controller may send a user plane data frame to the micro base station, where the user plane data frame carries the instruction information. Specifically, the micro base station controller may add a flag to a downlink data frame (for example, HS-DSCH data frame type 1) on the lub interface to instruct the micro base station to enable the priority scheduling based on HSDPA or E-HSDPA for the specific UE. Alternatively, the micro base station controller may indicate, by using the downlink data frame (for example, HS-DSCH data frame type 3) on the lub interface, the target UE for which the micro base station controller determines that the priority scheduling is required to be performed. If the data frame includes an identifier of a certain UE, the identifier of the UE may be used as the identifier of the target UE. It should be understood that this is not limited in this embodiment of the present invention.

It should be noted that a form of sending the instruction information by the micro base station controller is not limited in this embodiment of present invention.

704. The micro base station determines the specific UE and executes priority scheduling for the specific UE.

For example, the micro base station receives the instruction information in step 702, and the micro base station may determine the specific UE according to a parameter value of a UE. The parameter value may include but is not limited to: a CQI value, an SIR, and SI. It should be understood that this is not limited in this embodiment of the present invention. Specifically, if a CQI value reported by a UE at the physical layer and/or SI reported by the UE at the MAC layer is smaller than a corresponding threshold, the micro base station may determine that the UE is the specific UE for which the priority scheduling is required to be performed.

Alternatively, the micro base station may determine the target UE according to the instruction information received in step 603 and determine the specific UE from the target UE. Further, the micro base station may determine the specific UE according to a parameter value of the target UE. The parameter value may include but is not limited to: a CQI value, an SIR, and SI. It should be understood that this is not limited in this embodiment of the present invention. Specifically, if a CQI value of the target UE is smaller than a certain threshold, the micro base station may determine that the target UE is the specific UE for which the priority scheduling is required to be performed. It should be understood that this is not limited in this embodiment of the present invention.

In this way, flexibility of network scheduling can be effectively improved.

Alternatively, the executing, by the micro base station, the priority scheduling for the specific UE may be increasing scheduling resources allocated for the specific UE and/or increasing scheduling frequency for the specific UE. For example, according to an original scheduling algorithm, the micro base station averagely schedules the specific UE n times per second. After a priority scheduling algorithm is adopted, the micro base station averagely schedules the specific UE m times per second, where m > n. For another example, according to the original scheduling algorithm, scheduling resources of the specific UE are 10% of the total scheduling resources. After the priority scheduling algorithm is adopted, the scheduling resources of the specific UE are 30% of the total scheduling resources. Therefore, more scheduling resources are allocated for the specific UE. In this way, the performance of the specific UE can be effectively improved, and the throughput of the specific UE can be improved.

It should be understood that the proportion values of the scheduling resources of the specific UE in the total scheduling resources are only exemplary and are not intended to limit the present invention. It should further be understood that which priority scheduling algorithm is adopted for the specific UE is not limited in this embodiment of the present invention.

705. The micro base station sends scheduling information to a UE.

For example, the micro base station may send information about scheduling resources to the UE through an E-AGCH or an E-RGCH, so that the UE sends downlink data on corresponding resources.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

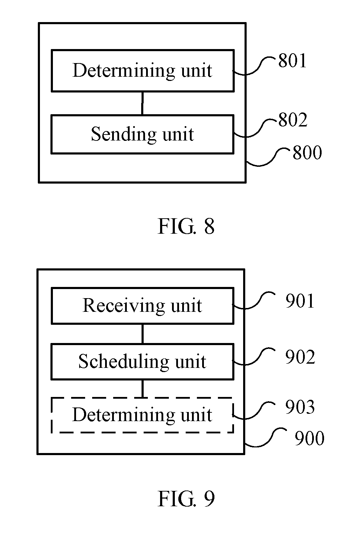

FIG. 8 is a structural block diagram of a base station controller according to an embodiment of the present invention. The base station controller 800 in FIG. 8 includes a determining unit 801 and a sending unit 802.

The determining unit 801 is configured to determine to enable priority scheduling for a specific user equipment UE.

The sending unit 802 is configured to send instruction information to a base station, where the instruction information is used to instruct the base station to execute the priority scheduling for the specific UE.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

The base station controller 800 is capable of implementing each step involving the base station controller in the methods in FIG. 1 to FIG. 7. Therefore, no further details are provided so as to avoid repetition.

Alternatively, as an embodiment, the determining unit 801 is specifically configured to: if the number of UEs in a soft handover area is greater than a threshold, determine to enable the priority scheduling for the specific UE; or, the determining unit 801 is specifically configured to: if a UE adopts a solution of extending cell coverage when selecting a serving cell, determine to enable the priority scheduling for the specific UE. Further, the adopting, by a UE, a solution of extending cell coverage when selecting a serving cell includes but is not limited to: adopting, by the UE, an offset value when selecting the serving cell.

Alternatively, as another embodiment, the determining unit 801 is further configured to: determine a target UE for priority scheduling, where the instruction information is further used to indicate an identifier of the target UE. Further, the determining unit 801 is specifically configured to: determine the target UE for priority scheduling according to throughput of a UE, signal strength of the UE, and/or signal quality of the UE, or determine a UE in the soft handover area as the target UE for priority scheduling. In this way, flexibility of network scheduling can be effectively improved.

Alternatively, as another embodiment, the sending unit 802 is specifically configured to: send a signaling message to the base station, where the signaling message carries the instruction information; or, the sending unit 802 is specifically configured to: send a user plane data frame to the base station, where the user plane data frame carries the instruction information.

Alternatively, as another embodiment, the enabling priority scheduling for the specific UE may include increasing scheduling resources allocated for the specific UE and/or increasing scheduling frequency for the specific UE. Therefore, more scheduling resources are allocated for the specific UE. In this way, the performance of the specific UE can be effectively improved, and the throughput of the specific UE can be improved.

FIG. 9 is a structural block diagram of a base station according to another embodiment of the present invention. The base station 900 in FIG. 9 includes a receiving unit 901 and a determining unit 902.

The receiving unit 901 is configured to receive instruction information sent by a base station controller.

A scheduling unit 902 is configured to execute priority scheduling for a specific user equipment UE according to the instruction information received by the receiving unit 901.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

Alternatively, in an implementation manner, the base station 900 further includes a determining unit 903, where the determining unit 903 is configured to: determine a target UE according to the instruction information, where the target UE is the specific UE; or configured to: determine a target UE according to the instruction information and determine the specific UE according to a parameter value of the target UE; or configured to: determine the specific UE according to a parameter value of a UE. The parameter value includes but is not limited to: a CQI value, an SIR, and SI. In this way, flexibility of network scheduling can be effectively improved.

Alternatively, as another embodiment, the receiving unit 901 is specifically configured to: receive a signaling message sent by the base station controller, where the signaling message carries the instruction information; or specifically configured to: receive a user plane data frame sent by the base station controller, where the user plane data frame carries the instruction information.

Alternatively, as another embodiment, the determining unit 903 is specifically configured to: increase scheduling resources allocated for the specific UE; and/or specifically configured to: increase scheduling frequency for the specific UE according to the instruction information. Therefore, more scheduling resources are allocated for the specific UE. In this way, the performance of the specific UE can be effectively improved, and the throughput of the specific UE can be improved.

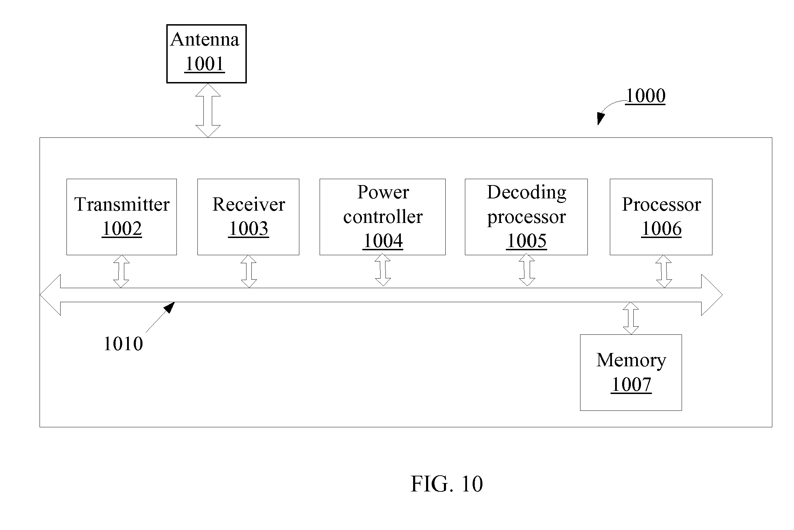

An embodiment of the present invention further provides an apparatus embodiment for implementing each step and method in the preceding method embodiments. This embodiment of the present invention may apply to base stations and user equipments in various communications systems. FIG. 10 shows an embodiment of a device. In this embodiment, a device 1000 includes a transmitter 1002, a receiver 1003, a power controller 1006, a decoding processor 1005, a processor 1006, a memory 1007, and an antenna 1001. The processor 1006 controls an operation of the device 1000, and the processor 1006 may also be called a central processing unit CPU or a processor. The memory 1007 may include a read-only memory and a random access memory and provides an instruction and data for the processor 1006. A part of the memory 1007 may further include a non-volatile random access memory (NVRAM). In a specific application, the device 1000 may be embedded into or itself may be a radio communications equipment, for example, a mobile telephone, and may further include a carrier that accommodates the transmitter 1002 and the receiver 1003 so as to allow data transmitting and receiving to be performed between the device 1000 and a remote location. The transmitter 1002 and the receiver 1003 may be coupled to the antenna 1001. Components of the device 1000 are coupled together through a bus system 1010. In addition to a data bus, the bus system 1010 further includes a power bus, a control bus, and a status signal bus. However, for ease of clear description, all buses in the figure are marked as the bus system 1010. The device 1000 may further include the processor 1006 that is configured to process signals and further includes the power controller 1004 and the decoding processor 1005.

The preceding methods disclosed in the embodiments of the present invention may apply to the device 1000 or is mainly implemented by the processor 1006 in the device 1000. The processor 1006 may be an integrated circuit chip that has a capability of processing signals. In an implementation process, each step of the preceding methods may be implemented by an integrated logical circuit of hardware or an instruction in a form of software in the processor 1006. The decoding processor, configured to execute the methods disclosed in the embodiments of the present invention, may be a general purpose processor, a digital signal processor (DSP), an application-specific integrated circuit (ASIC), a field programmable gate array (FPGA), another programmable logical device, a discrete logical device, a transistor logical device, or a discrete hardware component. The general purpose processor is capable of implementing or executing each method, step, and logical block diagram that are disclosed in the embodiments of the present invention. In addition, the general purpose processor may be a microprocessor, or the processor may also be any conventional processor, decoder, or the like. Steps of the methods disclosed in the embodiments of the present invention may be directly executed by a hardware decoding processor or may be executed by a combination of hardware and software modules in the decoding processor. The software module may be located in the random access memory, a flash memory, the read-only memory, a programmable read-only memory, an electrically erasable programmable read-only memory, a register, or another mature memory medium in this field. The memory medium is located in the memory 1007, and a decoding unit reads information in the memory 1007 and implements the steps of the preceding methods in combination with its hardware.

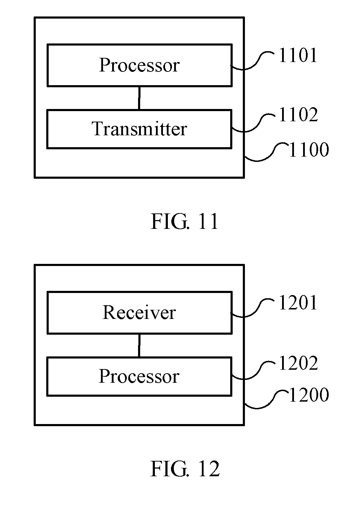

Further, FIG. 11 is a structural block diagram of a base station controller according to an embodiment of the present invention. FIG. 11 is a structural block diagram of a base station controller according to an embodiment of the present invention. A base station controller 1100 in FIG. 11 includes a processor 1101 and a transmitter 1102.

The processor 1101 is configured to determine to enable priority scheduling for a specific user equipment UE.

The transmitter 1102 is configured to send instruction information to a base station, where the instruction information is used to instruct the base station to execute the priority scheduling for the specific UE.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, where the specific UE is a UE with relatively low performance, and the base station executes the priority scheduling for the specific UE according to the instruction information, thereby improving the performance of the specific UE.

The base station controller 1100 is capable of implementing each step involving the base station controller in the methods in FIG. 1 to FIG. 7. Therefore, no further details are provided so as to avoid repetition.

Alternatively, as an embodiment, the processor 1101 is specifically configured to: if the number of UEs in a soft handover area is greater than a threshold, determine to enable the priority scheduling for the specific UE; or specifically configured to: if a UE adopts a solution of extending cell coverage when selecting a serving cell, determine to enable the priority scheduling for the specific UE. Further, the adopting, by a UE, a solution of extending cell coverage when selecting a serving cell includes but is not limited to: adopting, by the UE, an offset value when selecting the serving cell.

Alternatively, as another embodiment, the processor 1101 is further configured to: determine a target UE for priority scheduling, where the instruction information is further used to indicate an identifier of the target UE. Further, the processor 1101 is specifically configured to: determine the target UE for priority scheduling according to throughput of a UE, signal strength of the UE, and/or signal quality of the UE, or determine a UE in the soft handover area as the target UE for priority scheduling. In this way, flexibility of network scheduling can be effectively improved.

Alternatively, as another embodiment, the transmitter 1102 is specifically configured to: send a signaling message to the base station, where the signaling message carries the instruction information; or specifically configured to: send a user plane data frame to the base station, where the user plane data frame carries the instruction information.

Alternatively, as another embodiment, the enabling priority scheduling for the specific UE may include increasing scheduling resources allocated for the specific UE and/or increasing scheduling frequency for the specific UE.

Therefore, more scheduling resources are allocated for the specific UE. In this way, the performance of the specific UE can be effectively improved, and the throughput of the specific UE can be improved.

FIG. 12 is a structural block diagram of a base station according to another embodiment of the present invention. The base station 1200 in FIG. 12 includes a receiver 1201 and a processor 1202.

The receiver 1201 is configured to receive instruction information sent by a base station controller.

The processor 1202 is configured to execute priority scheduling for a specific user equipment UE according to the instruction information received by the receiver 1201.

The specific UE refers to a UE with relatively low performance, and a parameter indicating UE performance may include one or any combination of the following: throughput, signal strength, signal quality, and the like. The relatively low performance may be determined by comparing the parameter indicating UE performance with a threshold, for example, the throughput is less than or equal to a throughput threshold, the signal strength is lower than or equal to a strength threshold, the signal quality is lower than or equal to a quality threshold, and the like.

In this embodiment of the present invention, in the case of determining to enable priority scheduling for a specific user equipment UE, a base station controller sends instruction information to a base station, where the specific UE is a UE with relatively low performance, and the base station performs the priority scheduling for the specific UE according to the instruction information, thereby improving the performance of the specific UE.

A base station controller 1200 is capable of implementing each step involving the base station in the methods in FIG. 1 to FIG. 7. Therefore, no further details are provided so as to avoid repetition.

Alternatively, in an implementation manner, the processor 1202 is further configured to: determine a target UE according to the instruction information, where the target UE is the specific UE; or further configured to: determine a target UE according to the instruction information and determine the specific UE according to a parameter value of the target UE; or further configured to: determine the specific UE according to a parameter value of a UE. The parameter value includes but is not limited to: a CQI value, an SIR, and SI. In this way, flexibility of network scheduling can be effectively improved.

Alternatively, as another embodiment, the receiver 1201 is specifically configured to: receive a signaling message sent by the base station controller, where the signaling message carries the instruction information; or specifically configured to: receive a user plane data frame sent by the base station controller, where the user plane data frame carries the instruction information.

Alternatively, as another embodiment, the processor 1202 is specifically configured to: increase scheduling resources allocated for the specific UE; and/or specifically configured to: increase scheduling frequency for the specific UE according to the instruction information. Therefore, more scheduling resources are allocated for the specific UE. In this way, the performance of the specific UE can be effectively improved, and the throughput of the specific UE can be improved.

A communications system according to an embodiment of the present invention may include the preceding base station controllers 800/1100 or the preceding base stations 900/1200.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, a detailed working process of the foregoing system, apparatus, and unit may refer to the corresponding process in the foregoing method embodiments, and the details will not be described herein again.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A scheduling method, comprising:
determining to enable priority scheduling for a specific user equipment UE, wherein the specific UE is a UE with relatively low performance; and
sending instruction information to a base station, wherein the instruction information is used to instruct the base station to execute the priority scheduling for the specific UE.

2. The method according to claim 1, wherein the relatively low performance comprises at least one of the following conditions: throughput is less than or equal to a throughput threshold, signal strength is lower than or equal to a strength threshold, and signal quality is lower than or equal to a quality threshold.

3. The method according to claim 1 or 2, wherein the determining to enable priority scheduling for a specific UE comprises:
if the number of UEs in a soft handover area is greater than a threshold, determining to enable the priority scheduling for the specific UE; and/or
if a UE adopts a solution of extending cell coverage when selecting a serving cell, determining to enable the priority scheduling for the specific UE.

4. The method according to claim 3, wherein the adopting, by a UE, a solution of extending cell coverage when selecting a serving cell comprises:
adopting, by the UE, an offset value when selecting the serving cell.

5. The method according to any one of claims 1-4, before the sending instruction information to a base station, further comprising:
determining a target UE for priority scheduling; wherein:
the instruction information further comprises an identifier of the target UE.

6. The method according to claim 5, wherein the determining a target UE for priority scheduling comprises:
determining the target UE for priority scheduling according to throughput of a UE, signal strength of the UE, and/or signal quality of the UE; or
determining a UE in a soft handover area of a macro cell and a micro cell as the target UE for priority scheduling.

7. The method according to any one of claims 1-6, wherein the sending instruction information to a base station comprises:
sending a signaling message to the base station, wherein the signaling message carries the instruction information; or
sending a user plane data frame to the base station, wherein the user plane data frame carries the instruction information.

8. The method according to any one of claims 1-7, wherein the enabling priority scheduling for a specific UE comprises:
increasing scheduling resources allocated for the specific UE; and/or
increasing scheduling frequency for the specific UE.

9. A scheduling method, comprising:
receiving instruction information sent by a base station controller; and
executing priority scheduling for a specific user equipment UE according to the instruction information, wherein the specific UE is a UE with relatively low performance.

10. The method according to claim 9, wherein the relatively low performance comprises at least one of the following conditions: throughput is less than or equal to a throughput threshold, signal strength is lower than or equal to a strength threshold, and signal quality is lower than or equal to a quality threshold.

11. The method according to claim 9 or 11, before the executing priority scheduling for a specific user equipment UE according to the instruction information, further comprising:
determining a target UE according to the instruction information and determining the target UE as the specific UE; or determining a target UE according to the instruction information and determining the specific UE according to a parameter value of the target UE; or determining the specific UE according to a parameter value of a UE.

12. The method according to claim 11, wherein the parameter value comprises at least one of the following: a channel quality indicator CQI value, a signal-to-interference ratio SIR, and scheduling information SI.

13. The method according to any one of claims 9-12, wherein the receiving instruction information sent by a base station controller comprises:
receiving a signaling message sent by the base station controller, wherein the signaling message carries the instruction information; or
receiving a user plane data frame sent by the base station controller, wherein the user plane data frame carries the instruction information.

14. The method according to any one of claims 9-13, wherein the executing priority scheduling for a specific UE according to the instruction information comprises:
increasing scheduling resources allocated for the specific UE according to the instruction information; and/or
increasing scheduling frequency for the specific UE according to the instruction information.

15. Abase station controller, comprising:
a determining unit , configured to determine to enable priority scheduling for a specific user equipment UE, wherein the specific UE is a UE with relatively low performance; and
a sending unit, configured to send instruction information to a base station, wherein the instruction information is used to instruct the base station to execute the priority scheduling for the specific UE.

16. The base station controller according to claim 15, wherein the determining unit is specifically configured to:
if the number of UEs in a soft handover area is greater than a threshold, determine to enable the priority scheduling for the specific UE; or
specifically configured to: if a UE adopts a solution of extending cell coverage when selecting a serving cell, determine to enable the priority scheduling for the specific UE.

17. The base station controller according to claim 16, wherein the adopting, by a UE, a solution of extending cell coverage when selecting a serving cell comprises: adopting, by the UE, an offset value when selecting the serving cell.

18. The base station controller according to any one of claims 15-17, wherein the determining unit is further configured to:
determine a target UE for priority scheduling; wherein:
the instruction information is further used to indicate an identifier of the target UE.

19. The base station controller according to claim 18, wherein the determining unit is specifically configured to:
determine the target UE for priority scheduling according to throughput of a UE, signal strength of the UE, and/or signal quality of the UE; or
determine a UE in the soft handover area as the target UE for priority scheduling.

20. The base station controller according to any one of claims 15-19, wherein the sending unit is specifically configured to send a signaling message to the base station, wherein the signaling message carries the instruction information; or
specifically configured to send a user plane data frame to the base station, wherein the user plane data frame carries the instruction information.

21. The base station controller according to any one of claims 15-20, wherein the enabling priority scheduling for a specific UE comprises: increasing scheduling resources allocated for the specific UE and/or increasing scheduling frequency for the specific UE.

22. Abase station, comprising:
a receiving unit, configured to receive instruction information sent by a base station controller; and
a scheduling unit, configured to execute priority scheduling for a specific user equipment UE according to the instruction information received by the receiving unit, wherein the specific UE is a UE with relatively low performance.

23. The base station according to claim 18, wherein the base station further comprises a determining unit, and the determining unit is configured to: determine a target UE according to the instruction information and determine the target UE as the specific UE; or
configured to: determine a target UE according to the instruction information and determine the specific UE according to a parameter value of the target UE; or
configured to: determine the specific UE according to a parameter value of a UE.

24. The base station according to claim 23, wherein the parameter value comprises at least one of the following: a channel quality indicator CQI value, a signal-to-interference ratio SIR, and scheduling information SI.

25. The base station according to any one of claims 22-24, wherein the receiving unit is specifically configured to: receive a signaling message sent by the base station controller, wherein the signaling message carries the instruction information; or
specifically configured to: receive a user plane data frame sent by the base station controller, wherein the user plane data frame carries the instruction information.

26. The base station according to any one of claims 22-25, wherein the scheduling unit is specifically configured to: increase scheduling resources allocated for the specific UE according to the instruction information; and/or specifically configured to: increase scheduling frequency for the specific UE according to the instruction information.
